(19) Europäisches Patentamt / European Patent Office / Office européen des brevets

(11) **EP 3 172 823 B1**

(12) **EUROPÄISCHE PATENTSCHRIFT**

(45) Veröffentlichungstag und Bekanntmachung des Hinweises auf die Patenterteilung:
**09.09.2020  Patentblatt 2020/37**

(21) Anmeldenummer: **15756114.3**

(22) Anmeldetag: **22.07.2015**

(51) Int Cl.:
**H02M 3/335** (2006.01)

(86) Internationale Anmeldenummer:
**PCT/EP2015/066788**

(87) Internationale Veröffentlichungsnummer:
**WO 2016/012511 (28.01.2016 Gazette 2016/04)**

(54) **GLEICHSPANNUNGSWANDLER MIT TRANSFORMATOR**

DC-TO-DC CONVERTER COMPRISING A TRANSFORMER

CONVERTISSEUR CONTINU/CONTINU COMPORTANT UN TRANSFORMATEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.07.2014  DE 102014214542**

(43) Veröffentlichungstag der Anmeldung:
**31.05.2017  Patentblatt 2017/22**

(73) Patentinhaber: **Rheinisch-Westfälische Technische Hochschule Aachen 52056 Aachen (DE)**

(72) Erfinder:
• **STIENEKER, Marco 52062 Aachen (DE)**
• **DE DONCKER, Rik W. A. A. B-3000 Leuven (BE)**

(74) Vertreter: **dompatent von Kreisler Selting Werner - Partnerschaft von Patent- und Rechtsanwälten mbB Deichmannhaus am Dom Bahnhofsvorplatz 1 50667 Köln (DE)**

(56) Entgegenhaltungen:
CN-A- 102 403 905     JP-A- 2013 085 394
US-A1- 2002 126 517   US-A1- 2003 178 889
US-A1- 2010 142 228   US-A1- 2014 153 290

• KHERALUWALA M H: "PERFORMANCE CHARACTERIZATION OF A HIGH-POWER DUAL ACTIVE BRIDGE DC-TO-DC CONVERTER", IEEE TRANSACTIONS ON INDUSTRY APPLICATIONS, IEEE SERVICE CENTER, PISCATAWAY, NJ, US, Bd. 28, Nr. 6, 1. November 1992 (1992-11-01), Seiten 1294-1301, XP000331298, ISSN: 0093-9994, DOI: 10.1109/28.175280
• S M Shiva ET AL: "Tap Changing Transformer based Dual Active Bridge Bi-Directional DC-DC Converter", 2015 9th International Conference on Power Electronics and ECCE Asia (ICPE-ECCE Asia), 5. Juni 2015 (2015-06-05), XP055232936, Gefunden im Internet: URL:http://ieeexplore.ieee.org/stamp/stamp .jsp ?arnumber=7168056 [gefunden am 2015-12-02]
• STEIGERWALD R L ET AL: "A comparison of high power DC-to-DC soft-switched converter topologies", INDUSTRY APPLICATIONS SOCIETY ANNUAL MEETING, 1994., CONFERENCE RECORD OF THE 1994 IEEE DENVER, CO, USA 2-6 OCT. 1994, NEW YORK, NY, USA,IEEE, 2 October 1994 (1994-10-02), pages 1090-1096, XP010124216, DOI: 10.1109/IAS.1994.377564 ISBN: 978-0-7803-1993-6
• SOLTAU NILS ET AL: "Ensuring soft-switching operation of a three-phase dual-active bridge DC-DC converter applying an auxiliary resonant-commutated pole", 2014 16TH EUROPEAN CONFERENCE ON POWER ELECTRONICS AND APPLICATIONS, IEEE, 26 August 2014 (2014-08-26), pages 1-10, XP032651286, DOI: 10.1109/EPE.2014.6910857 [retrieved on 2014-09-25]

**Beschreibung**

Die Erfindung betrifft einen Gleichspannungswandler mit einem Transformator. Eine als Dual-Active Bridge (DAB) bezeichnete Gleichspannungstopologie mit zwei Brückenschaltung und einem dazwischen angeordneten Transformator ermöglicht die Anbindung sowohl von Erzeugungseinheiten z.B. Windenergieanlagen, Photovoltaik-Anlagen, Speichersysteme z.B. Batterieladegeräte wie auch die Anbindung von elektrischen Lasten wie z.B. Antriebe an Gleichspannungsnetze. Auch können Gleichspannungsnetze gleicher und auch unterschiedlicher Spannung mit dieser Topologie verbunden werden. Eine galvanische Trennung wird durch einen Transformator sichergestellt.

Aus der Veröffentlichung "A Three-Phase soft-switched High-Power-Density dc/dc Converter for High-Power Applications" veröffentlicht beim IEEE Industry Applications Society Annual Meeting 1988 und dem US Patent 5,027,264 "Power conversion apparatus for DC/DC conversion using dual active bridges", ist ein Gleichspannungskonverter mit einem dreiphasigen System bekannt. Bei dem Gleichspannungskonverter ist zwischen zwei Brückenschaltungen ein Transformator vorgesehen ist. Dieser Gleichspannungskonverter ist den Watt-Bereich bis zu Gigawatt-Bereich einsetzbar. Dabei werden alle leistungselektronischen Schaltkreise im weichschaltenden Bereich betrieben, wodurch die Verluste bei den Schaltungen vermindert werden und die Schaltfrequenz erhöht werden kann.

Aus der DE 3721591 A1 ist ein Verfahren zum primärseitigen Umschalten der Übersetzungsverhältnisses eines Transformators bekannt. Bei dem Transformator handelt es sich insbesondere eines Mittelfrequenz-Transformators, mit großem Spannungs- und Strombereich während des Betriebs. Derartige Transformatoren werden als Hochspannungserzeuger in Röntgengeneratoren verwendet, die eine Röntgenröhre speisen. Zur Anpassung von Strom- und Spannungsbeaufschlagung ist der Transformator mit einem Stufenschalter versehen, durch den das Übersetzungsverhältnis des Transformators geändert werden kann. Durch die Umschaltung des Übersetzungsverhältnisses wird eine Reduzierung des Primärstroms und somit auch eine Reduzierung der Netzstromaufnahme und des Stromflusses über die dem Transformator vorgeschalteten Stellglieder erreicht. Eine primärseitige Abschaltung vor dem Stufenschalter für die Umschaltung des Übersetzungsverhältnisses wird vorgenommen, so dass die Schaltglieder des Stufenschalters während des Schaltvorganges nicht belastet und somit kaum einem Verschleiß unterworfen sind.

Weiterer relevanter Stand der Technik für die vorliegende Erfindung ist außerdem:

- JP 2013 085394 A
- US 2002/0126517 A1
- CN 102 403 905 A
- KHERALUWALA M H: "PERFORMANCE CHARACTERIZATION OF A HIGH-POWER DUAL ACTIVE BRIDGE DC-TO-DC CONVERTER",IEEE TRANSACTIONS ON INDUSTRY APPLICATIONS, IEEE SERVICE CENTER, PISCATAWAY, NJ, US, Bd. 28, Nr. 6, 1. November 1992 (1992-11 -01), Seiten 1294-1301 und SOLTAU NILS ET AL: "Ensuring soft-switching operation of a three-phase dual-active bridge DC-DC converter applying an auxiliary resonant-commutated pole",2014 16TH EUROPEAN CONFERENCE ON POWER ELECTRONICS AND APPLICATIONS, IEEE, 26. August 2014 (2014-08-26), Seiten 1-10.

Diese Druckschriften offenbaren ebenfalls isolierte Gleichstromrichter mit Vollbrücken auf der Primär bzw. Sekundärseite des Transformators, wobei entweder mit einem Stufenschalter das Übertragungsverhältnis des Transformators geändert werden kann oder erörtert wird, wie das Weichschalten einer Dual Active Bridge in einem weiten Bereich gewährleistet werden kann.

Der Erfindung liegt die Aufgabe zugrunde, einen Gleichspannungswandler bereitzustellen, bei dem eine höhere Effizienz erreicht wird.

Diese Aufgabe wird durch eine Dual-Active Bridge Anordnung gelöst, indem der weichschaltende Bereich der Dual-Active Bridge vergrößert wird.
Der weichschaltende Betriebsbereich des Dual-Active Bridge Gleichspannungswandlers ist abhängig von der zu übertragenden Leistung und dem Verhältnis zwischen Eingangs- und Ausgangsspannung. Innerhalb des weichschaltenden Betriebsbereichs sind die Schalterverluste der eingesetzten Halbleiter minimiert und die Systemeffizienz ist maximiert. Die erfindungsgemäße Lösung der Aufgabe wird durch den Einsatz eines Transformators erreicht, der mit einem Stufenschalter versehen ist. Durch den Stufenschalter kann das Transformationsverhältnis verändert werden. Dadurch kann erreicht werden, dass der weichschaltende Bereich nicht verlassen wird.

Insbesondere bei großen Unterschieden zwischen der Eingangs- und Ausgangsspannung wird dieser weichschaltende Betriebsbereich verlassen. Die Schaltverluste nehmen zu und die Effizienz nimmt ab. Durch eine

Änderung des Transformationsverhältnisses des Transformators kann erreicht werden, dass der weichschaltende Bereich beibehalten wird.

In einer vorteilhaften Ausgestaltung der Erfindung ist vorgesehen, dass reinkapazitive Snubber, bei denen Kondensatoren zur Minimierung der Ausschaltverluste parallel zum Halbleiterschalter geschaltet werden, eingesetzt werden. Bei Verwendung von alleinigen Snubber-Kapazitäten ist der Betrieb im weichschaltenden Bereich zwingend erforderlich und darf ohne Erweiterungen des Gleichspannungswandlers nicht verlassen werden. Diese Einschränkung ist insbesondere kritisch, wenn der Gleichspannungswandler als Verbindung zweier Gleichspannungsnetze mit variierender Spannung eingesetzt wird oder Energiespeichersysteme mit stark schwankenden Spannungen in ein Gleichspannungsnetz integriert werden.

In einer bevorzugten Ausführungsform, bei der keine galvanische Trennung erforderlich ist, wird als Transformator ein Spartransformator verwendet. Spartransformatoren sind wesentlich kostengünstiger erhältlich.

Nachfolgend werden Aufführungsbeispiele der Erfindung anhand der Figuren beschrieben.

Es zeigt:

Fig.1: Schematische Darstellung einer einphasigen Dual Active Bridge mit schaltbarem Transformator;

Fig.2: Schaltbild einer einphasigen Dual Active Bridge DC-DC Wandler mit Leistungsschalter, Entlastungskondensatoren (Snubber) und anti-parallel geschalteten Dioden;.

Fig. 3: Transformator für eine dreiphasige Dual Active Bridge mit mechanischem Stufenschalter;

Fig. 4: Schaltbild eines Transformators mit einem Stufenschalter mit Halbleiterschaltern;

Fig. 5: Kurvendiagramm zur Darstellung des weichschaltenden Bereichs;

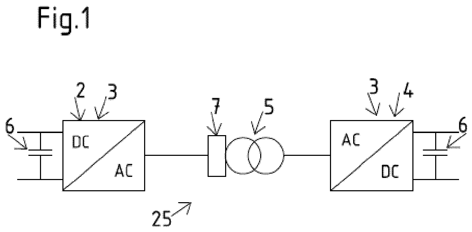

In Figur 1 ist eine schematische Darstellung eines Gleichspannungswandlers 1 in Form einer einphasigen Dual Active Bridge 25, kurz mit einphasiger DAB bezeichnet, dargestellt. Die DAB weist eine erste Brückenschaltung 3 mit der die Gleichspannung in eine Wechselspannung transformiert. Die Wechselspannung wird durch einen Transformator 5 transformiert, der mit einem Stufenschalter 7 versehen ist. Durch den Stufenschalter 7 ist das Übersetzungsverhältnis n des Transformators einstellbar. Der Stufenschalter 7 kann sowohl auf der Ober- als auch auf der Unterspannungsseite eingesetzt werden. Die mittels des Transformators generierte Wechselspannung wird mittels einer nachfolgenden zweiten Brückenschaltung 3 wieder in eine Gleichspannung umgewandelt. Dadurch kann die an der einen Seite der DAB anliegende Gleichspannung in eine andere Gleichspannung umgewandelt werden. Auf beiden Seiten der DAB ist ein Glättungskondensator 6 vorgesehen, durch den Spannungsschwankungen, auch als Ripple bezeichnet, geglättet werden. Diese Spannungsschwankungen und Rippel können sowohl durch Störungen in den angeschlossenen Anlagen (z.B. Kabelnetz, Freileitungsnetz) erzeugt werden als auch durch die Schaltvorgänge der DAB selbst.

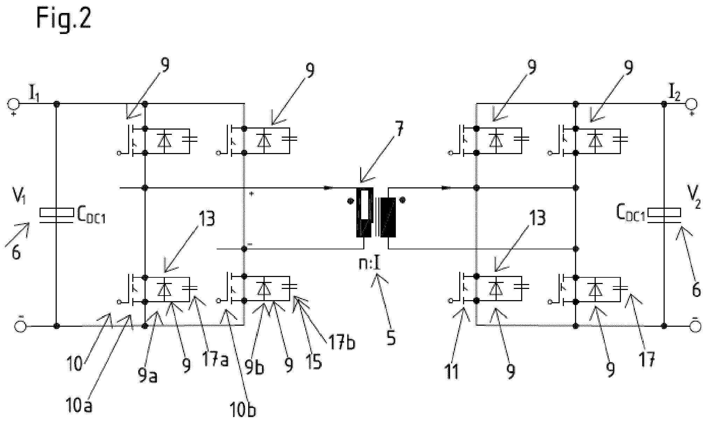

In Figur 2 ist ein Schaltplan einer einphasigen DAB 25 gezeigt. Aus dem Schaltplan ist der Aufbau einer Brückenschaltung 3 ersichtlich. Bei dem gezeigten Ausführungsbeispiel sind die Brückenschaltungen 3 auf beiden Seiten des Transformators 5 identisch aufgebaut. Jede Brückenschaltung 3 weist vier Halbleiterschaltermodule 9 in Brückenschaltung auf. Jedes Halbleiterschaltungsmodul 9 umfasst einen IGBT 11 als Halbleiterschalter 10. Der Einsatz anderer Halbleiter wie MOSFETs oder ICGTs ist ebenfalls technisch möglich. Solange der weichschaltende Bereich nicht verlassen wird, benötigen MOSFETs und rückwärtsleitende IGBTs keine anti-parallele Diode. In der gezeigten Ausführung ist jedoch eine anti-parallel zu dem Halbleiterschalter geschaltete Diode 13 gezeigt. Als Snubber 15 ist parallel zum Halbleiterschalter 10 ein Kondensator 17, auch mit C-Snubber 17 bezeichnet, vorgesehen. Durch den Transformator sind die beiden Brückenschaltungen und damit die beiden Seiten des Gleichspannungswandlers 1 galvanisch voneinander getrennt. Der Brückenschaltung 3 ist wieder ein Glättungskondensator 6 parallel geschaltet.

Die galvanische Trennung führt zu Vorteilen bezüglich der Auslegung der DAB 1, zu höheren Güte der transformierten Gleichspannung und verhindert die Ausbreitung von Fehlern und Störungen die in den angeschlossenen Anlagen (sowohl am Eingang, als auch am Ausgang) auftreten.

Durch die galvanische Trennung müssen die Halbleiterschaltungsmodule 9 der DAB, die Isolation der DAB gegenüber Erdpotential und auch angeschlossene Komponenten (Kabel, Generatoren, Motoren, Schutzeinrichtungen, Energiespeicher,...) nur auf die Spannung ausgelegt sein, die auf der jeweiligen Seite des Transformators 5 höchstens auftreten kann. Dies ist insbesondere von Vorteil, wenn durch das Windungsverhältnis des Transformators 5 die Nennspannung zwischen dem Eingang und Ausgang variieren.

Die galvanische Trennung in Gleichspannungswandlern kann nur realisiert werden, wenn die Gleichspannung in Wechselspannung umgewandelt wird. Nach der galvanischen Trennung durch den Transformator 5 wird die Wechselspannung wieder gleichgerichtet. Spannungsschwankungen (Rippel) in der Gleichspannung wirken sich auch auf die Qualität der Spannung in der erzeugten Wechselspannung aus. Durch die Filterwirkung des Transformators 5 werden bestimmte Störungen/Schwankungen von der einen Seite des Transformators 5 nicht auf die andere Seite übertragen. Nach der Umformung der Wechselspannung in Gleichspannung sind somit auch diese Spannungsschwankungen (Rippel) nicht mehr vorhanden. Dies erhöht somit die Qualität der transformierten Spannung, die anschließend durch die Zwischenkreiskondensatoren stabilisiert wird.

Diese Spannungsschwankungen und Rippel können durch Störungen in den angeschlossenen Anlagen (z.B. Kabelnetz, Freileitungsnetz) erzeugt werden. Durch die Anwendung galvanisch getrennter Gleichspannungswandler, werden diese Störungen isoliert. Auch die fehlerhafte Erhöhung der Systemspannung gegenüber Erdpotential aufgrund auftretender Störungen (z.B. Kurzschlüsse zwischen zwei ursprünglich getrennten Energienetzen,...) wird aufgrund der galvanischen Trennung durch den Transformator nicht weitergegeben.

Somit stellt die DAB eine geeignete Topologie für die Anwendung in zukünftigen Gleichspannungsnetzen dar. Zwischen zwei Verteilnetzen kann die DAB als Stellglied zur Regelung von Leistungsflüssen eingesetzt werden. Aber auch zur Einbindung von Energiespeichersystemen und erneuerbaren Energieträgern (Wind, Solar,...) kann die DAB eingesetzt werden. Die Leistung der DAB in diesen Anwendungsfeldern liegt im Multi-Megawatt-Bereich. Durch Reihen- und auch Parallelschaltung von mehreren DAB können DAB-Systeme aufgebaut werden, deren Gesamtleistung entsprechend der Summe der Teilleistungen ist.

Bei der hier betrachteten DAB 1 können C-Snubber 17, RC-Snubber und RCD-Snubber zum Einsatz kommen. Alle Snubber-Schaltungen 15 werden parallel zum Halbleiterschalter 10 (IGBT, IGCT, MOSFET) und zur Diode 13 geschaltet. Bei C-Snubbern 17 handelt es sich lediglich um einen Kondensator, beim RC-Snubber um eine Reihenschaltung eines Kondensators und Widerstands und beim RCD-Snubber wird zum Widerstand des RC-Snubbers noch eine Diode geschaltet. Zur effizientesten Lösung führt der C-Snubber 17, auch "lossless-Snubber" genannt. Allerdings darf bei der Anwendung von C-Snubbern 17 der weichschaltende Betrieb, der nachfolgend noch näher erläutert wird, unter keinen Umständen verlassen werden.

Bei einer DAB 1 in der hier beleuchteten Leistungsklasse (Multi-Megawatt bis hin zu zum Gigawatt Bereich) und Eingangs- und Ausgangspannungen im Bereich der Mittelspannung (>= 1kV) kommen als Halbleiterschalter 10 sowohl IGBTs 11 als auch IGCTs zur Anwendung. Bevorzugt werden Silizium IGBTs und IGCTs verwendet. Aber Reihenschaltungen von MOSFETs sind auch möglich. Auch Halbleiter auf Basis von SiC und GaN können eingesetzt werden. Der Vorteil von IGBTs und IGCTs ist, dass diese Bauelemente für hohe Leistungen auf dem Markt verfügbar sein und somit ohne aufwändige Reihen- und Parallelschaltung hohe Spannungen sperren und schalten, sowie hohe Ströme führen können. Weiteres Merkmal ist die hohe Effizienz dieser beiden Technologien in Multi-Megawatt-Anwendungen und den damit typischen Schaltfrequenzen im Kilohertz-Bereich. Durch Einhaltung bestimmter Betriebsbereiche können die Einschaltverluste der Halbleiterschalter 10 minimiert werden. Der Halbleiterschalter 10 wird immer nur dann eingeschaltet, wenn die parallel-geschaltete Diode 13 einen Strom führt. Dadurch ist sichergestellt, dass die Spannung über dem Halbleiterschalter 10 gegen Null geht und nahezu keine Einschaltverluste entstehen. Ausschaltverluste der Halbleiterschalter können durch den Einsatz von sogenannten Snubber-Schaltungen 15 reduziert werden.

Im weichschaltenden Betrieb führt die Diode 13 den Strom, wenn der entsprechende benachbarte Halbleiterschalter 10 eingeschaltet wird. In diesem Fall ist auch gewährleistet, dass der Snubber-Kondensator 17 entladen ist. Im hartschaltenden Betriebsbereich leitet die Diode 13 keinen Strom - der Snubber-Kondensator 17 ist auf die Eingangsspannung aufgeladen. Wird der Halbleiterschalter 10 nun eingeschaltet, wird der geladene Snubber-Kondensator 17 kurzgeschlossen und entlädt sich über den Halbleiterschalter 10 z.B. einen IGBT/IGCT. Dies kann zur Zerstörung des Bauelements führen. Der weichschaltende Betrieb ermöglicht somit nicht nur eine hohe Effizienz der DAB 1, sondern auch den Einsatz von "lossless-Snubbern".

Ein weiterer Aspekt schränkt die Anwendbarkeit von "lossless-Snubbern" ein: Der Laststrom entlädt den Snubber-Kondensator 17 im weichschaltenden Betrieb. Ist der Snubber-Kondensator 17a entladen, fließt der Strom durch die Diode 9a (parallel zum Kondensator 17a) weiter. Analog zum Entladevorgang des Kondensators 17a parallel zum Leistungshalbleiter 10a, der unmittelbar eingeschaltet werden soll, findet der Ladevorgang des Snubber-Kondensators 17b statt, dessen benachbarter Leistungsschalter 10b ausgeschaltet worden ist.- Ist der Laststrom nicht ausreichend groß, kann der Snubber-Kondensator 17a nicht rechtzeitig vor dem Einschalten des Halbleiterschalters 10a entladen werden. Dies führt, wie im hartschaltenden Betrieb, möglicherweise zur Zerstörung des Bauelements. Die Anwendbarkeit von "lossless-Snubbern" ist somit nicht nur durch den hartschaltenden Betriebsbereich, sondern auch durch eine Minimalleistung (Minimalstrom), die von der DAB 1 übertragen werden muss, begrenzt. Ist bei der Anwendung der DAB mit Windenergieanlagen die Leistung die von der DAB übertragen werden soll nicht ausreichend groß, kann die DAB mit lossless-Snubbern den Betrieb nicht aufnehmen. Durch den Einsatz von Energiespeichersystemen, nicht dargestellt, kann die fehlende Leistung zum Erreichen der Minimalleistung dem System hinzugefügt werden. Somit kann die DAB ausgestattet mit Snubber-Kondensatoren 17 den Betrieb aufnehmen.

Weicht das Verhältnis d zwischen Eingangs- und Ausgangsspannung zu stark von eins ab, ist der Transformatorstrom gegenüber der Transformatorspannung nicht mehr nacheilend und die Halbleiter werden nicht mehr weichschaltend betrieben. Bild 5 zeigt die Grenzen in Abhängigkeit von d und der zu übertragenden Leistung. Zusätzlich zum Verlust des weichschaltenden Betriebs wird der Wirkungsgrad der DAB schlechter, wenn d von eins abweicht.

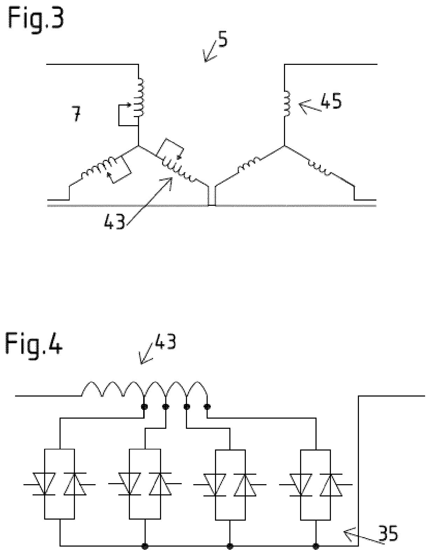

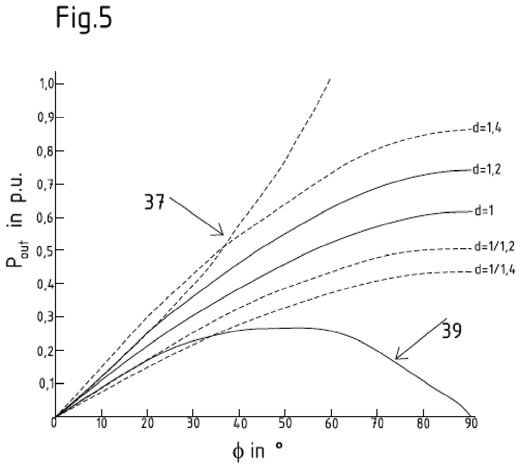

Durch die Anpassung des Windungsverhältnisses des Transformators 5 kann der weichschaltende Betriebsbereich vergrößert werden. Die Anpassung des Wicklungsverhältnisses erfolgt mit dem Stufenschalter 7 durch Änderung der Anzapfung an der Wicklung. Der Stufenschalter 7 und somit auch die Anzapfung der Wicklung kann sowohl mechanisch ausgeführt werden, wie in Figur 3 dargestellt, als auch elektronisch, wie beispielhaft in Figur 4 oder in der Veröffentlichung "A New Approach to Solid-State On Load Tap Changing Transformers" erschienen im IEEE Transaction on Power Delivery, Vol. 13, No. 3, Juli 1998, gezeigt ist. Bei der elektronischen Ausführung sind die verschiedenen Anzapfungen über Leistungshalbleiter, die ggf. durch antiparallele Schaltung zweier identischer Bauelemente die bidirektionale Stromführung ermöglichen, realisiert. Entsprechend des einzustellenden Windungsverhältnisses werden die jeweiligen Leistungshalbleiter eingeschaltet bzw. ausgeschaltet. Die Windungen des Transformators 5 sind in Figur 3 und Figur 4 mit Bezugszeichen 43 bezeichnet. Bei der elektronischen Ausführung können abschaltbare Leistungshalbleiter 35 und auch nicht-abschaltbare (insbesondere Thyristoren) Leistungshalbleiter 35 eingesetzt werden. Die Stufenschalter am Transformator zur Einstellung des Windungsverhältnisses sind so ausgeführt, dass mindestens zwei Zustände realisiert werden können. Bevorzugte Ausführungsform sind Stufenschalter, die beliebig viele verschiedene Windungsverhältnisse des Transformators einstellen können. In Figur 5 ist eine Darstellung des hartschaltenden Betriebsbereichs und des weichschaltenden Betriebsbereichs dargestellt. Auf der Hochachse ist die normierte Leistung $P_o$, y-Achse, als Funktion des Winkels $\phi$ für verschiedene d aufgetragen. Dabei gibt d das Spannungsverhältnis des Gleichspannungswandlers an. Das Spannungsverhältnis d zwischen Eingangs- und Ausgangsspannung hängt auch vom Transformationsverhältnis des Transformators 5 ab. Durch den Stufenschalter 7 kann das Spannungsverhältnis des Transformators 5 verändert werden. Dadurch kann das Spannungsverhältnis d verändert werden, so dass wieder der weichschaltende Bereich erreicht bzw. beibehalten wird.

$$Vs' = \frac{Vs}{n}$$

$$d = \frac{Vs'}{Vp}$$

Durch die Veränderung des Wicklungs- oder Spannungsverhältnisses n wird in dieser Anwendung kein Einfluss auf die Eingangsspannung $V_p$ bzw. die Ausgangsspannung $V_s$, $V_s'$ genommen. Ziel ist es durch die Anpassung von *n* Einfluss auf d zu nehmen.

Die Vergrößerung des weichschaltenden Bereichs der Dual-Active Bridge Anordnung wird durch einen Transformator erreicht, dessen Übersetzungsverhältnis n mittels eines Stufenschalters verändert werden kann. Der weichschaltende Bereich ist der Bereich ist der Bereich, bei dem das Halbleitermodul 9 bei ausschalten des Halbleitungsschalter 10 noch leitend ist. Die Grenze 37 zwischen dem weichschaltenden Bereich bei der eingangsseitigen Brückenschaltung 3 ist in dem Diagramm eingezeichnet. Weiterhin ist die Grenze 39 zwischen weichschaltendem und hartschaltendem Bereich der ausgangseitigen Brückenschaltung markiert. Der Betrieb innerhalb dieser Grenzen wird durch eine übergeordnete Regelung sichergestellt, die in Abhängigkeit von Betriebsparametern Einfluss auf das Wicklungsverhältnis nimmt.

Eine dreiphasige DAB 27 weist eine erste eingangsseitige Brückenschaltung 2 auf und eine ausgansseitige Brückenschaltung 4. Durch die bi-direktionale Brückenschaltungen 3 wird eine Gleichspannung in eine Wechselspannung und umgekehrt umgewandelt.

Zwischen den Brückenschaltungen ist wiederum ein Transformator 5, der mit einem Stufenschalter 7 versehen ist, vorgesehen. Eingangsseitig und Ausgansseitig ist wiederum ein Glättungskondensator 6 angeordnet.

Für die Bereitstellung einer dreiphasigen Wechselspannung sind 6 Halbleitermodule 9 eingangsseitig vom Transformator 5 zu Brückenschaltung 3 verschaltet. In gleicher Wiese sind ausgangsseitig 6 Halbleitermodule 9 zu Brückenschaltungen 3 verschaltet. Jedes Halbleitermodul 10 weist ein Halbleitungsschalter 10 auf. Bei dem vorgesehenen Einsatzgebiet bietet sich die Verwendung von GaN, Silizium, sowie Silizium-carbid Bauelemente an, wie MOSFETs, IGBT's und IGCT's. Parallel zu dem Halbleiterschalter 10 ist je nach Ausführung des Halbleiterschalters 10 eine Diode 13 und ein Snubber-Kondensator 17 geschaltet.

Generell gilt, dass auch in Ausführungen der ein-phasigen DAB (1p-DAB) bzw. der drei-phasigen DAB (3p-DAB) ohne Snubber-Kondensator 17 der Einsatz von Stufenschaltern zu höheren Wirkungsgraden führt. Durch den Betrieb der Gleichspannungswandler mit einem Spannungsverhältnis welches nicht stark von eins abweicht, wird die Blindleistung im Transformator reduziert. Dies führt zu geringeren Verlusten im Transformator wie auch in den beiden leistungselektronischen Umrichtern. Die Reduzierung der Blindleistung erlaubt weiterhin eine kleinere Auslegung des Transformators. Dadurch werden Materialbedarf und Kosten reduziert.

Grundsätzlich ist zwischen der ein-phasigen (1p-DAB) 25 und der drei-phasigen DAB (3p-DAB) 27 zu unterscheiden. Der Vorteil der 1p-DAB 25 liegt bei der geringeren Anzahl benötigter Halbleiterschalter 10 von acht Stück und der Anwendbarkeit einer Vielzahl verschiedener Betriebsstrategien zur Optimierung der Effizienz (weichschaltender Betrieb). Dahingegen finden in der 3p-DAB 27 zwölf Halbleiterschalter 10 Anwendung. Der Vorteil der 3p-DAB 27 liegt insbesondere bei der Auslegung der benötigten passiven Komponenten wie Transformator 5 und Glättungskondensator 6, die kleiner Baugrößen aufweisen als bei vergleichbaren 1p-DAB 27. Auch bei der 3p-DAB 27 ist der weichschaltende Betrieb möglich.

Die magnetische Flussverkettung in Transformatoren 5 bestimmt die benötigte Querschnittsfläche des verwendeten Transformatorkerns. Um die gleiche magnetische Flussverkettung einer 3p-DAB 27 mit einer 1p-DAB 25 zu erzeugen, darf die Eingangs- bzw. Ausgangsspannung nur 44 % von der Spannung einer 3p-DAB 27 betragen. Im Umkehrschluss bedeutet dies, dass die Querschnittsfläche und somit auch die Größe (und Kosten) des Transformators 5 in einer 1p-DAB größer ist als die Größe des Transformators 5 einer 3p-DAB 27, falls die Gleichspannung sowohl bei der 1p-DAB 25 als auch bei der 3p-DAB 27 gleich sein sollen.

Der Rippel der Gleichspannungen bei 3p-DAB 27 ist geringer im Vergleich zum Rippel bei einer 1p-DAB 25. Dies führt dazu, dass der Glättungskondensator 6 am Eingang und Ausgang bei einer 1p-DAB 25 eine höhere Kapazität aufweisen muss. Dies ist insbesondere der Fall, wenn das dynamische Spannungsverhältnis d zwischen Eingang- und Ausgangspannung ungleich eins ist. In diesem Fall ist zudem der Strom, den der Glättungskondensator aufnimmt, sehr groß. Dies muss ebenfalls bei der Dimensionierung berücksichtigt werden und führt zu Nachteilen bezüglich Baugröße und Kosten.

Zusammenfassend sind insbesondere folgende bevorzugte Merkmale der Erfindung festgehalten: Die Erfindung betrifft eine Anlage.

**Bezugszeichenliste**

| | |
|---|---|
| 1 | Gleichspannungswandler, Dual Aktive Bridge |
| 2 | eingangsseitige Brückenschaltung |
| 3 | Brückenschaltung |
| 4 | ausgangsseitige Brückenschaltung |
| 5 | Glättungskondensator |
| 7 | Stufenschalter |
| 9 | Halbleitermodul |
| 10 | Halbleiterschalter |
| 11 | IGBT |
| 13 | Diode |
| 15 | Snubber-Schaltung |
| 17 | Snubber-Kondensator |
| 21 | Leistungshalbleiterschalter des Stufenschalters |
| 25 | 1-phasige DAB |
| 27 | 3-phasige DAB |
| 33 | Schalter des Stufenschalters |
| 35 | Leistungshalbleiter des Stufenschalters |
| 37 | eingangsseitige Grenze zwischen weichschaltendem und hartschaltendem Bereich |
| 39 | ausgangsseitige Grenze zwischen weichschaltendem und hartschaltendem Bereich |
| 43 | Primärwindung des Transformators |
| 45 | Sekundärwindung des Transformators |

**Patentansprüche**

**1.** Dual-active bridge Gleichspannungswandler (1) umfassend eine Schaltungsanordnung mit zwei Brückenschaltungen (3, 2, 4) mit aktiven Halbleiterschaltern (10) und einen zwischen den Brückenschaltungen (3, 2, 4,) angeordneten Transformator (5) zum Betrieb im weichschaltenden Bereich **dadurch gekennzeichnet, dass** der Transformator (5) mit einem Stufenschalter (7) versehen ist, durch den das Transformationsverhältnis schaltbar ist, wobei das Transformationsverhältnis durch den Stufenschalter (7) dabei so einstellbar ist, dass der Gleichspannungswandler (1) auch bei großen Unterschieden zwischen Eingangs- und Ausgangsspannung ohne Änderung der Eingangs- oder Ausgangsspannungen im weichschaltenden Betriebsbereich betrieben werden kann.

**2.** Gleichspannungswandler nach Anspruch 1, **dadurch gekennzeichnet, dass** als Halbleiterschalter (10) Silizium Halbleiterschalter oder Halbleiterschalter auf Siliziumcarbid-Basis zur Bereitstellung einer höheren Taktfrequenz oder Galiumnitrid-Basis vorgesehen sind.

**3.** Gleichspannungswandler Anspruch 1 oder 2, **dadurch gekennzeichnet, dass** als Transformator ein Spartransformator vorgesehen ist.

**4.** Gleichspannungswandler nach einem der vorhergehenden Ansprüche, **dadurch gekennzeichnet, dass** als Halbleiterschalter (10) IGBTs (11) oder IGCTs als Leistungshalbleiterschalter vorgesehen sind, durch die ein Einsatz des Gleichspannungswandlers (1) in der Leistungsklasse von zum Gigawattbereich möglich wird, wobei den Leistungshalbleiterschaltern vorzugsweise jeweils eine Diode (13) anti-parallel geschaltet ist.

**5.** Gleichspannungswandler nach einem der vorhergehenden Ansprüche, **dadurch gekennzeichnet, dass** der Gleichspannungswandler (1) ein dreiphasiger Gleichspannungswandler (27) ist.

**6.** Gleichspannungswandler nach einem der vorhergehenden Ansprüche, **dadurch gekennzeichnet, dass** parallel zu jedem Halbleiterschalter (10) nur ein Snubber-Kondensator (17) als Snubber-Schaltung (15) vorgesehen ist.

**7.** Gleichspannungswandler nach einem der vorhergehenden Ansprüche, **dadurch gekennzeichnet, dass** der Stufenschalter (7) zur Schaltung des Transformationsverhältnis des Transformators (5) abschaltbare Leistungshalbleiterschalter aufweist.

**8.** Gleichspannungswandler nach einem der vorhergehenden Ansprüche, **dadurch gekennzeichnet, dass** der Stufenschalter (7) zur Schaltung des Transformationsverhältnis des Transformators (5) nicht-abschaltbare Leistungshalbleiter, vorzugsweise Thyristoren, aufweist.

9. Gleichspannungsnetz mit mindestens einem Gleichspannungswandler (1) nach einem der vorhergehenden Ansprüche,
**dadurch gekennzeichnet,**
**dass** das Gleichspannungsnetz mindestens einen dem Gleichspannungswandler (1) zuordenbares Energiespeichersystem aufweist, durch das bei einem eine vorbestimmte Minimalleistung unterschreitenden Minimalstrom Leistung zum Betreiben des Gleichspannungswandlers (1) zur Aufnahme des Betriebs des Gleichspannungswandlers (1) zusätzlich eingespeist werden kann.

10. Gleichspannungsnetz nach Anspruch 9,
**dadurch gekennzeichnet,**
**dass** mindestens ein Energieerzeuger, vorzugsweise ein regenerativer Energieerzeuger, insbesondere eine Windkraftanlage, in dem Gleichspannungsnetz vorgesehen ist, der mit dem Gleichspannungswandler (1) versehen ist oder dem der Gleichspannungswandler zugeordnet ist, wobei der durch den Energieerzeuger erzeugte Strom über den Gleichspannungswandler (1) in das Gleichspannungsnetz eingespeist werden kann.

11. Verfahren zum Betrieb eines Gleichspannungsnetzes umfassend mindestens einen Gleichspannungswandler (1) nach einem der Ansprüche 1 bis 8, mit den folgenden Schritten:

   • Bereitstellen einer durch die Gleichspannungswandler (1) nicht übertragbare und vorbestimmte Minimalleistung unterschreitende Leistung durch einen von einem Stromerzeuger erzeugten Strom
   • Zusätzliches Einspeisen von Leistung aus einem dem Stromerzeuger zugeordneten Energiespeichersystem zur Überschreitung der vorbestimmten Minimalleistung,
   • Übertragen der gemeinsamen durch Stromerzeuger und Energiespeichersystem bereitgestellten Leistung mittels des Gleichspannungswandlers (1) ins Gleichspannungsnetz.

12. Das Verfahren nach Anspruch 11 mit dem folgenden Schritt:

   • Einstellen des Transformationsverhältnisses durch den Stufenschalter (7) so, dass der Gleichspannungswandler (1) auch bei großen Unterschieden zwischen Eingangs- und Ausgangsspannung ohne Änderung der Eingangs- oder Ausgangsspannungen im weichschaltenden Betriebsbereich betrieben werden kann.

**Claims**

1. A dual active bridge DC-DC converter (1), comprising a circuit arrangement having two bridge circuits (3, 2, 4) with active semiconductor switches (10) and a transformer (5) being arranged between the bridge circuits (3, 2, 4), for operation in the soft-switching range,
**characterized in that**
the transformer (5) is provided with a step switch (7) via which the transformation ratio is switchable, wherein the transformation ratio is adjustable by the step switch (7) in such a manner that the DC-DC converter (1) can also be operated in the soft-switching operating range in case of major differences between input and output voltage without making changes to the input or output voltages.

2. The DC-DC converter according to claim 1,
**characterized in that**
silicon semiconductor switches or semiconductor switches based on silicon carbide for providing a higher clock frequency or based on gallium nitride are provided as semiconductor switches (10).

3. The DC-DC converter according to claim 1 or 2,
**characterized in that**
an autotransformer is provided as a transformer.

4. The DC-DC converter according to any one of the preceding claims,
**characterized in that**
IGBTs (11) are provided as semiconductor switches (10) or IGCTs are provided as power semiconductor switches by means of which it is possible to use the DC-DC converter (1) in the power class from up to the gigawatt range, wherein respectively one diode (13) is preferably connected antiparallel to the power semiconductor switches.

5. The DC-DC converter according to any one of the preceding claims,
**characterized in that**
the DC-DC converter (1) is a three-phase DC-DC converter (27).

6. The DC-DC converter according to any one of the preceding claims,
**characterized in that**
only one snubber capacitor (17) is provided parallel to each semiconductor switch (10) as a snubber circuit (15).

7. The DC-DC converter according to any one of the preceding claims,
**characterized in that**
the step switch (7) for switching the transformation ratio of the transformer (5) comprises power semiconductor switches adapted to be switched off.

8. The DC-DC converter according to any one of the preceding claims,
**characterized in that**
the step switch (7) for switching the transformation ratio of the transformer (5) comprises power semiconductor switches, preferably thyristors, adapted not to be switched off.

9. A DC distribution network comprising at least one DC-DC converter (1) according to any one of the preceding claims,
**characterized in that**
the DC distribution network comprises at least one energy storage system adapted to be associated with the DC-DC converter (1) and by means of which, when the minimum current falls below a predetermined minimum power, power for operating the DC-DC converter (1) can be additionally fed in to commence operation of the DC-DC converter (1).

10. The DC distribution network according to claim 9,
**characterized in that**
at least one energy generator, preferably a regenerative energy generator, in particular a wind power plant, is provided in the DC distribution network which is provided with the DC-DC converter (1) or associated with the DC-DC converter, wherein the current generated by the energy generator can be fed into the DC distribution network via the DC-DC converter (1).

11. A method for operating a DC distribution network having at least one DC-DC converter (1) according to one of claim 1 to 8, comprising the following steps:

    • providing a power which cannot be transmitted by the DC-DC converters (1) and which falls below a predetermined minimum power by a current generated by a power generator,
    • additional feeding of power from an energy storage system associated with the current generator for exceeding the predetermining minimum power,
    • transmitting the power jointly provided by the current generator and the energy storage system by means of the DC-DC converter (1) into the DC distribution network.

12. The method according to claim 11, comprising the following step:

    • adjusting the transformation ratio by means of the step switch (7) such that the DC-DC converter (1) can also be operated in the soft-switching operating range in case of major differences between input and output voltage without making changes to the input or output voltage.

**Revendications**

1. Convertisseur de tension continue Dual-active bridge (1) comprenant un circuit dotée de deux circuits en ponts (3, 2, 4) avec des commutateurs à semiconducteurs actifs (10) et d'un transformateur (5) agencé entre les circuits en ponts (3, 2, 4), destiné au fonctionnement en commutation douce,
**caractérisé en ce que**
le transformateur (5) est prévu avec un commutateur à échelons (7), par le biais duquel le rapport de transformation peut être commuté, dans lequel le rapport de transformation est ainsi réglable par le biais du commutateur à échelons (7) de sorte que le convertisseur de tension continue (1) peut fonctionner dans la plage opérationnelle de commutation douce également en cas de grande différence entre la tension d'entrée et la tension de sortie sans variation des tensions d'entrée ou des tensions de sortie.

2. Convertisseur de tension continue selon la revendication 1,
**caractérisé en ce que**
en tant que commutateurs à semi-conducteurs (10) sont prévus des commutateurs à semi-conducteurs au silicium ou des commutateurs à semi-conducteurs à base de carbure de silicium pour la fourniture d'une fréquence d'horloge supérieure ou à base de nitrure de gallium.

3. Convertisseur de tension continue selon la revendication 1 ou 2,
**caractérisé en ce que**
un autotransformateur est prévu en tant que transformateur.

4. Convertisseur de tension continue selon l'une des revendications précédentes,
**caractérisé en ce que**
en tant que commutateur à semi-conducteurs (10), des IGBT ou des ICGT sont prévus comme commutateurs à semi-conducteurs de puissance, par le biais desquels une utilisation du convertisseur de tension continue (1) est possible dans la classe de puissance allant jusqu'au gigawatt, dans lequel une diode (13) est de préférence respectivement branchée de manière antiparallèle aux commutateurs à semi-conducteurs de puissance.

5. Convertisseur de tension continue selon l'une des revendications précédentes,
**caractérisé en ce que**
le convertisseur de tension continue (1) est un convertisseur de tension continue triphasé (27).

**6.** Convertisseur de tension continue selon l'une des revendications précédentes, **caractérisé en ce que** en parallèle de chaque commutateur à semi-conducteurs (10) est prévu un seul condensateur d'amortissement (17) en tant que circuit d'amortissement (15).

**7.** Convertisseur de tension continue selon l'une des revendications précédentes, **caractérisé en ce que** le commutateur à échelons (7) comporte des commutateurs à semi-conducteurs de puissance désactivables pour la commutation du rapport de transformation du transformateur (5).

**8.** Convertisseur de tension continue selon l'une des revendications précédentes, **caractérisé en ce que** le commutateur à échelons (7) comporte des semi-conducteurs de puissance non désactivables, de préférence des thyristors, pour la commutation du rapport de transformation du transformateur (5).

**9.** Réseau à tension continue doté d'au moins un convertisseur de tension continue (1) selon l'une des revendications précédentes, **caractérisé en ce que** le réseau à tension continue comporte au moins un système d'accumulateur d'énergie pouvant être ordonné au convertisseur de tension continue (1), par le biais duquel, lors d'un courant minimal inférieur à une puissance minimale prédéfinie, de la puissance destinée au fonctionnement du convertisseur de tension continue (1) peut être injectée en sus afin de lancer le fonctionnement du convertisseur de tension continue (1).

**10.** Réseau à tension continue selon la revendication 9, **caractérisé en ce que** au moins un générateur d'énergie, de préférence un générateur d'énergie renouvelable, en particulier une éolienne, dans lequel est prévu le réseau à tension continue doté du convertisseur de tension continue (1) ou auquel est adjoint le convertisseur de tension continue, dans lequel le courant généré par le générateur d'énergie peut être injecté dans le réseau à tension continue par le biais du convertisseur de tension continue (1).

**11.** Procédé de fonctionnement d'un réseau à tension continue comprenant au moins un convertisseur de tension continue (1) selon l'une des revendications 1 à 8, avec les étapes suivantes :

• fourniture, par un courant généré par un générateur de courant, d'une puissance non transmissible à travers le convertisseur de tension continue (1) et inférieure à une puissance minimale prédéfinie
• injection additionnelle de puissance provenant d'un système d'accumulateur d'énergie ordonné au générateur de courant afin de dépasser la puissance minimale prédéfinie,
• transmission dans le réseau à tension continue de la puissance commune fournie par le générateur de courant et du système d'accumulateur d'énergie au moyen du convertisseur de tension continue (1).

**12.** Procédé selon la revendication 11 avec l'étape suivante :

• paramétrage du rapport de transformation par le biais du commutateur à échelons (7) de sorte que le convertisseur de tension continue (1) peut fonctionner dans la plage opérationnelle de commutation douce également en cas de grande différence entre la tension d'entrée et la tension de sortie sans variation des tensions d'entrée ou des tensions de sortie.

Fig.1

Fig.2

Fig.3

Fig.4

Fig.5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5027264 A
- DE 3721591 A1
- JP 2013085394 A
- US 20020126517 A1
- CN 102403905 A

**In der Beschreibung aufgeführte Nicht-Patentliteratur**

- A Three-Phase soft-switched High-Power-Density dc/dc Converter for High-Power Applications. *IEEE Industry Applications Society Annual Meeting,* 1988
- PERFORMANCE CHARACTERIZATION OF A HIGH-POWER DUAL ACTIVE BRIDGE DC-TO-DC CONVERTER. **KHERALUWALA M H.** IEEE TRANSACTIONS ON INDUSTRY APPLICATIONS. IEEE SERVICE CENTER, 01. November 1992, vol. 28, 1294-1301
- Ensuring soft-switching operation of a three-phase dual-active bridge DC-DC converter applying an auxiliary resonant-commutated pole. **SOLTAU NILS et al.** 2014 16TH EUROPEAN CONFERENCE ON POWER ELECTRONICS AND APPLICATIONS. IEEE, 26. August 2014, 1-10
- A New Approach to Solid-State On Load Tap Changing Transformers. *IEEE Transaction on Power Delivery,* Juli 1998, vol. 13 (3